# EUROPEAN PATENT APPLICATION

(11) **EP 4 761 200 A1**
(43) Date of publication of application: **17.06.2026**
(21) Application number: 25216861.2
(22) Date of filing: 19.11.2025
(51) Int. Cl.: H04L 41/0631, H04L 41/14, H04L 41/147, H04L 41/16, H04L 43/50

(54) **METHOD AND APPARATUS FOR PROVIDING HUMAN INTERPRETABLE SEMANTIC INFORMATION OF NETWORK STATES**

(30) Priority: 10.12.2024 FI 20246434
(71) Applicant: Nokia Solutions and Networks Oy, 02610 Espoo (FI)
(72) Inventor: SZILÁGYI, Péter, 1083 Budapest (HU); VULKÁN, Csaba, 1083 Budapest (HU)
(74) Representative: Bryers Intellectual Property Ltd

(57) **Abstract**

Described herein is a method, a network node a computer readable medium for providing human interpretable semantic information of one or more network states generated during execution of a network component of a target communication network or a network digital twin, NDT, of a corresponding target communication network. The method is capable of generating a trained network state information model which is configured to identify and anticipate human interpretable semantic information of the one or more network states comprehensible for network experts so that no additional means are required to identify potential errors or conditions within a present network systems, wherein said method comprises at least the steps of: receiving a set of data elements and information identifying pre-defined test cases under which a SWNC is executed in a second target communication network; training, on the basis of the received set of data elements and information, a network state information model to determine human interpretable semantic information of at least one network state of the SWNC identified during execution in the first target communication network based on the identified network states; applying at least one network model including the trained network state information model to the first target communication network to generate at least one human interpretable semantic information of one or more network states of the SWNC determined during execution in the first target communication network; and reporting, by the trained network state information model, the at least one human interpretable semantic information associated with the one or more network states.

## Description

### TECHNOLOGY

The present disclosure relates to a method and an apparatus for providing human interpretable semantic information of one or more network states generated during execution of a network component of a target communication network or a network digital twin, NDT, of a corresponding target communication network.

### BACKGROUND

Any discussion of the background art throughout the specification should in no way be considered as an admission that such are is widely known or forms part of common general knowledge in the field.

Network digital twins, NDT, are sophisticated virtual replicas of physical networks, created through the integration of real-time data and advanced simulation techniques to mirror the intricate behaviors, architecture, and performance of an actual communication network. These digital models provide organizations with a powerful tool to gain deep, actionable insights into their network operations, facilitating more strategic decision-making and driving operational efficiencies. Specifically, by enabling the simulation of various scenarios and network conditions, NDTs allow for proactive identification and resolution of potential issues, often before they manifest in the physical network. This capability is particularly invaluable in complex, dynamic environments such as telecommunications, cloud computing, and the Internet of Things (IoT), where the demands for reliability, performance, and scalability are paramount. As a consequence, NDTs enhance an organization's ability to optimize resources, reduce downtime, accelerate the rollout of new services, and mitigate risks, all while driving significant cost savings.

In addition, in order to harness the power of NDTs in a pre-defined system of communication networks and to further elaborate on each of the positive effects generated by the use of NDTs, it is deserving of mention that, as part of the broader ETSI Zero-Touch Network and Service Management (ZSM) initiative, particularly Work Item ZSM015, already focuses on harnessing the power of NDTs, specifically for zero-touch management of networks and services for a considerable amount of time. Herein, said ZSM framework in particular emphasizes the need for automation and the elimination of manual intervention, enabling intelligent and autonomous network operations. In this context, NDTs must support a variety of capabilities, including the ability to provide predictions about network performance and behaviour. These predictions are critical for anticipating network issues, optimizing performance, and ensuring the efficient allocation of resources. In addition, the ZSM framework highlights the importance of providing analytic and diagnostic capabilities, such as root cause analysis (RCA), for an NDT, specifically so as to help diagnose and address issues within a given communication network being simulated by the NDT.

On that account, for an NDT to fulfil these functions effectively, the NDT must model the dynamic behaviour of its corresponding communication network and its services at an appropriate level of abstraction. This allows the prediction of future network states, performance, and behaviour while it equally enables the possibility to effectively associating different circumstances occurring in a multi-element communication network without being required to semantically connect each of the identified information generated during simulation.

At the same time, however, it is not enough for the predictions to be accurate; they must also be explainable. This means that the predicted states and behaviours should be equally, at best, presented in a manner that is directly tied to the physical network components, rather than existing in abstract modelling or AI-driven latent spaces that are not easily interpretable by network operators or domain experts.

As an example, within Wang et al., "Real-Time Analysis of Multiple Root Causes for Anomalies Assisted by Digital Twin in NFV Environment", IEEE Transactions on Network and Service Management, Vol. 19(2), 2022 a method for root cause analysis of virtual network functions, VNF, based on the tracking and correlation of different physical and virtual component states for establishing paths of failure propagation is stipulated.

However, often these outputs do not directly map back to the original data inputs, making the labelling of network states a complex task. Furthermore, dynamic state models, which capture transitions between states over time, add another layer of complexity as the generated states are occasionally interrupted, intertwined or influences by other states or circumstances applied in the system, making it challenging to identify root causes that led to given states. As a consequence, these models are sensitive to changes in the network's behaviour, creating state trajectories that increase the semantic distance between the model's outputs and the original inputs.

Thus, to summarize, there is a need to develop an accurate and efficient way of predicting network states occurring during execution of a given NDT and/or, in the best case, also in the respective communication network simulated by the NDT, also ensuring that these predictions are explainable in a manner that is comprehensible. Accordingly, this would enable operators and/or users to interpret predicted network behaviours and performance in the context of the actual network, facilitating better decision-making and proactive management of network resources.

### SUMMARY

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

In addition, to further elucidate on different terms used throughout the present description, it is noted that a network node mentioned in the present disclosure may be a network element. A network element, such as communication elements, may be further a terminal device, control elements or functions, such as access network elements, like a base station / BS, a gNB, a radio network controller, a core network control element or function, such as a gateway element, or other network elements or functions. In addition, as described herein, a UE, and any other elements, functions or applications may be implemented by software, e.g., by a computer program product for a computer, and/or by hardware. Moreover, for executing their respective processing, correspondingly used devices, nodes, functions or network elements may include several means, modules, units, components, etc. which may be required for control, processing and/or communication/signalling functionality, yet are not directly shown herein for the sake of comprehensibility.

Based on this and in order to solve the above-mentioned problems, a method, apparatus and a computer-readable medium storing instructions according to the herewith introduced independent claims are proposed, which are specifically built so as to provide human interpretable semantic information of network states of a software defined network component, SWNC, generated in a at least a first target communication network for a pre-determined user or system, particularly so as to produce information regarding one or more of the network states generated during SWNC execution that are explainable and relatable by domain experts.

As a consequence, in accordance with the present disclosure, there may be provided a method for providing human interpretable semantic information of network states of a software defined network component, SWNC, generated in a first target communication network, comprising:
receiving a set of data elements and information identifying pre-defined test cases under which the SWNC is executed in a second target communication network;
training, on the basis of the received set of data elements and information, a network state information model to determine human interpretable semantic information of at least one network state of the SWNC identified during execution in the first target communication network based on the identified network states;
applying at least one network model including the trained network state information model to the first target communication network to generate at least one human interpretable semantic information of one or more network states of the SWNC determined during execution in the first target communication network; and
reporting, by the trained network state information model, the at least one human interpretable semantic information associated with the one or more network states to, for example, a network element or operator.

As a result, the subject matter of the herewith presented invention may specifically relate to a mechanism provided by an artificial intelligence (IE) and machine learning (ML)-based network state information model which, rooted in an initial training process in which the corresponding network state information model is initially at least fed with corresponding test case execution information (i.e. the set of data elements and information mentioned above) for a given SWNC, is capable of generating human interpretable semantic information concerning one or more network states generated during an (undefined) execution of the corresponding SWNC, therefore achieving the above-mentioned effect of ensuring a comprehensible identification of generated network states and, with it, circumstances existent in a respective communication network.

Herein, in some examples, the first target communication network may be further defined as a target communication network or a network digital twin, NDT, of the second target communication network, resulting in the effect that the provided trained network state information model may be both, applicable to the same real communication network for which it was trained for, but also to a corresponding NDT simulating the given real communication network. Consequently, by this, the specific effect may be generated that the network state information model provided in this disclosure is trained by real-life events occurring during predefined test case executions in the actual (i.e. real) communication network, while its application can also be further transferred to the simulated network provided by the NDT, thereby allowing for a generation of network state information closely related to real-life occurrences.

Moreover, in some examples, the the set of data elements and information identifying pre-defined test cases may additionally comprises at least one of pre-defined test conditions under which the SWNC is executed, an expected SWNC behaviour including state information regarding network states generated by the SWNC when being executed under the pre-defined test conditions and an expected output of the SWNC, and an observable test output of the SWNC identified after executing the SWNC using the associated test conditions.

Herein, the pre-defined test conditions may relate to a varying number of execution parameters under which the corresponding SWNC may be executed, while the actual content of the test conditions may relate to parameters specifically concerning one or more circumstances the given SWNC may be conflicted with. At it, potential examples for these test conditions may be, for instance, varying levels of network traffic in case the SWNC is used for network load and traffic pattern dependent processes, network topologies in case of varying network configurations, network link qualities, security breach parameters or varying QoS parameters. In addition, the expected SWNC behavior may correspond to predefined or ideal performance and operational characteristics of the SWNC, including information concerning the respective network states, generated during execution of the SWNC while being conflicted with the aforementioned pre-defined test conditions. For this, additional examples for said expected SWNC behavior may be, as an example, SWNC characteristics regarding performance metrics (throughput, latency, packet loss, jitter, error rates etc.), resource usage (e.g. CPU/memory utilization), state transition and failure recovery (state changes, recovery behavior), security and anomaly detection (intrusion detection, access control) or operational boundaries (threshold, limits, stress behavior). Moreover, an "expected output" may refer to an ideal or predefined outcome, that is an output, of the SWNC when being executed in a corresponding test case, wherein an "observable test output" may refer to the actual outcome or result produced by the network component when subjected to the pre-defined test conditions during test case execution. On that account, the respective observed test output information may be especially much more verbose than what is captured in the expected output, particularly as it equally takes system irregularities or unexpected network behavior (e.g. irregular bottle neck characteristics) into account.

In addition, in some examples, the above-mentioned method using the predefined set of data elements and information for network state information model training may be further comprising:
performing test case execution to generate the set of data elements and information used for network state information training by executing the SWNC of the second target communication network under the associated test conditions and determining the output of the SWNC as the observable test output.

Consequently, next to the actual training of the corresponding network state information model, the mechanism of the herewith provided invention may equally include the actual test case execution of the corresponding SWNC in the target communication network, resulting in the effect that the mechanism of the present invention may define a self sufficient system capable of already generating, by providing a predefined number of conditions used to define the test cases, the respective observable outputs required for model training and with it, the possibility of both, train and apply the respective network state information model to a given target communication network and/or NDT. At the same time, with the actual test case execution included into the proposed mechanism, a respective training process can be further customized to the actual conditions required to describe the corresponding SWNC behavior, thus leading to a more precise and resource efficient provision of the required human interpretable semantic information.

Further, in some examples, when considering the sequence to be conducted for training the corresponding network state information model, the respective steps for training of the network state information model may also comprise:
training the network state information model in a state identification model segment of the network state information model, on the basis of the received set of data elements and information, to identify network states of the SWNC based on an observable output of the SWNC after execution in the first target communication network; and
training the network state information model in a state information generating model segment of the network state information model, on the basis of the received set of data elements and information and on the basis of the identified the network states, to generate human interpretable semantic information associated to the identified network states based on the identified network states.

Accordingly, in a first example embodiment of the present invention, the respective network state information model may be comprised of at least two different functional model segments (the state identification model segment and the state information generating model segment) which may be trained and applied independently or, at least, consecutively so as to avoid additional complexity during training as well as improve resource efficiency.

On that account, the first model segment, the state identification model segment, may correspond to a trainable state identification model function that is trained and thus configured to identify associated network states of the corresponding SWNC when executed under unknown conditions (that is, the real-life application of the SWNC in the target communication network or the NDT). For this, the corresponding state identification model segment may be trained, by receiving the aforementioned set of data elements and information, to associate a given number of network states with one or more observable outputs generated by the SWNC during process execution, by training the respective model segment to associate a given observed output with one or more network states introduced during the training phase (e.g. by network state information included in the received set of data elements and information).

Furthermore, the second model segment, the network state information model, may correspond to a trainable network state information generation function which is trained to determine and generate the respective human interpretable semantic information on the basis of the corresponding network states identified by aforementioned state identification model segment of the network state information model. Herein, the training of this second model segment may be conducted independently to the training of the first model segment and/or may be conducted consecutively after the training of the first model segment is finished. Moreover, the corresponding training may be conducted in such way that the second model segment may receive the one or more network states identified and learned during training of the first model segment, the set of data elements and information for network state identification or both information as general training input and, based on these information, is trained to associate a given human interpretable semantic information with the one or more network states identified by the first model segment, by training the respective model segment to associate a fraction or all of the identified network states with interpretable information already present during the respective test case execution (e.g. by the information gained from the set of data elements and information describing a given test case associated with the identified network states).

As a consequence, in this first embodiment of the herewith proposed network state information model, the training of the corresponding network state information model may lead to a dual-function identification model in which, based on the two different model segments, human interpretable semantic information concerning one or more network states of a SWNC may be generated, specifically by determining, in a first step, existing network states of the SWNC based on a given observable SWNC output, while then, in a second step, the sought human interpretable semantic information are generated and associated to the identified network states, each intrinsically in the same network state information model.

Based on this, in a further example, the step of applying the respective network state information model to generate the corresponding human interpretable semantic information for a SWNC in the first target communication network may further comprise:
executing the SWNC in the first target communication network under unknown conditions so as to generate the observable output; and
applying the trained network state information model to the first target communication network by determining, by the state identification model segment of the trained network state information model, the existent network states of the executed SWNC based on the generated observable output and generating, by the state information generating model segment of the network state information model, the at least one human interpretable semantic information of the one or more network states of the SWCN based on the network states determined by the state identification model segment.

Consequently, in this first embodiment of the proposed network state information model including the dual-functional and trained characteristics of both, identifying corresponding network states of a SWNC based on a generated output of the SWNC and, thereinafter, identifying and generating associated human interpretable information concerning the identified network states, a full functional and automatic mechanism may be generated by which comprehensible information attributed to one or more network states can be provided solely based on a single output of the respective SWNC. In addition, since the respective model segments are trained via several test cases concerning the same SWNC executed under different test conditions, high-level precision for both of the network state and information output may be enabled as the model segments may be capable of "recognizing" which test case scenarios matches best the current operational conditions of the SWNC to be identified by the network state information model (based on the observed SWNC output) and provides exact network state information by recalling the matching test case descriptions (e.g. the set of data elements and information concerning the respective test cases).

In contrast, in a second embodiment of the present invention, it may be equally possible that the herewith disclosed network state information model may not be configured to provide both, an integrated network state identification and network state information generation function, but is only capable of identifying and generating respective human interpretable information associated to network states already previously identified by an additional, that is, external network state identification model. At it, this second embodiment may be specifically usable in case a given network system already includes a functional network state detection mechanism or may be constituted with specific characteristics not allowing the dual-functional model mentioned above (e.g. in case a network system may consist of specific security characteristics forcing the usage of an external state identification model), leading to the effect that the network state identification model of this second embodiment may result in an enhanced integrability for already well-established network systems.

As a consequence, and concerning the above-mentioned second embodiment of the herewith disclosed invention, another example for the training step of training the respective network state information model may equally comprise the steps of:
transmitting the received set of data elements and information into a network state model configured to identify network states of the SWCN based on an observable test output of the SWCN, the SWCN being executed in the second target communication network;
applying the network state model on the basis of the transmitted set of data elements and information to identify network states of the SWNC being executed in the second target communication network based on the imported set of data elements and information; and
training the network state information model, on the basis of the received set of data elements and information and on the basis of the identified network states, to generate human interpretable semantic information associated to at least one of the identified network states based on the identified network states.

Accordingly, concerning this second embodiment of the present invention, the same training process concerning the identification and generation of human interpretable semantic information of identified SWNC network states may be conducted. In contrast, in exchange with the dual-functional characteristics of the network state information model of the first embodiment requiring the network state information model to train both, the network state identification model segment for network state identification and the state information generating model to determine respective information associated to the identified network states, the corresponding training process of the second embodiment may require only the training of the corresponding network state information determination (previously conducted by the state information generating model), while the corresponding determination of present network states (thereinafter used to train the network state information model) may be individually processed by an already trained network state model additionally present in the respective network system. As a consequence, with this integrability of the corresponding network state information model may be increased while, additionally, the required resources for training the respective model may be improved, as herewith the provided model requires only the training of one specific output (i.e. the human interpretable semantic information) instead of two (i.e. the training of the state identification followed by the determination of the state information based on the state identification).

In addition, the same technical improvements may be gained by thereinafter applying the respectively trained network state information model to the first communication network executing the respective SWNC under unknown conditions, specifically since, in this embodiment, the trained model is only configured to determine and output the corresponding human interpretable semantic information of the network states already previously identified by the trained network state model.

Consequently, in another example of the present invention, the step of applying the at least one network model to the first target communication network in the second embodiment of this invention may further comprise the steps of:
executing the SWNC in the first target communication network under unknown conditions so as to generate an observable output;
applying the network state model by determining the existent network states of the executed SWNC based on the generated observable output; and
applying the network state information model by generating the at least one human interpretable semantic information of the network state of the SWCN based on the network states determined by the network state model.

Herein, it is further noted that the described "network state model" may be the same network state model formerly used to train the network state information model in the associated training phase, particularly so as to enhance the identification precision of the corresponding model. In another example embodiment, it may be yet equally possible to use different network state models in the training and application phase, predominantly so as to increase the usability of the proposed model. In the same time, the already trained network state model may be likewise trained with the same data/information (i.e. the set of data elements and information) used for network state information model training, but can be equally trained beforehand, i.e. with formerly present information, resulting in the effect that the "trained network state model" may be considered as any present network state identification model present in the system, including traditional or legacy state identification models. On that basis, the independence of the so generated network state information model of the second embodiment thus enables to efficiently re-use existing network state models and is capable of turning them into an extensive model mechanism configured to equally output comprehensible information regarding one or more of the identified network states, in addition to the actual identification of the respective states.

As a consequence, based on both of the herewith present embodiments, a precise and, above all, resource efficient way to generate human interpretable semantic information concerning one or more network states created by an SWNC during actual execution in a target communication network or a corresponding NDT can be provided, resulting in the effect that predictions and analysis required for the network to work properly, e.g. in case of fault analysis, can be significantly enhanced.

In addition, further configurations of the above-mentioned embodiments may result to additional improvements within the proposed mechanism.

For example, in another example configuration of any of the above-mentioned embodiments, the step of reporting the at least one human interpretable semantic information may further comprise:
annotating the one or more network states of the SWNC with the associated at least one human interpretable semantic information; and
reporting the one or more network states with the associated human interpretable semantic information annotated to the network states to, for example, a network element or operator.

Accordingly, in addition to a normal output of the given human interpretable semantic information, e.g. to a corresponding user or system element (e.g. in order to inform, by means of the state information, a given user about a respective context/circumstance found during network state detection), a respective human interpretable semantic information may be equally used as an annotation with the respectively identified network states associated with the corresponding network state information, while, at the same time, not only the respective network state information, but also the associated network states annotated with its information are output to a user/system element.

As a consequence, based on the above-mentioned configuration, the herewith proposed network state information model may be equally equipped with an automatic network state information self-annotating function by which the respectively generated state information may be automatically coupled and stored with its corresponding network states. Herein, this may specifically lead to an additionally improved resource-efficiency within a respective network system, predominantly since, in case of consecutive fault analysis, respective state information may be effectively read out from the stored annotation data and/or associated with given network states without being required to repeat the respective application process of the network state information model. In addition, by consecutively annotating respective network states with information concerning SWNC circumstances/behaviours (e.g. fault causes, system parameters etc.), network states being specific or even representing root causes for a given network behaviour may be efficiently identified as such would aggregate a considerable amount of similar network state information content for additional analysis.

Furthermore, actual annotation execution may be processed via different implementations. In an example embodiment, annotations may be stored as metadata alongside network state data in Network Management Systems, NMS. In other implementations, network devices may equally embed annotations in Simple Network Management Protocol, SNMP, fraps, providing context to events like link failures or performance degradations. Moreover, further embodiments may likewise use telemetry data (annotations may be attached to real-time telemetry data streams), Syslog and Event Logging, Real-Time Dashboards (shown as tooltips or labels on network monitoring dashboards) or annotation assignment via API calls.

Further, in another example of the present invention, the set of data elements and information identifying pre-defined test cases corresponds to log information generated during Continuous Integration/ Continuous Development, CI/CD, pipeline execution of the SWNC,
wherein the method further comprising:
performing CI/CD pipeline execution of different test cases of the SWNC to generate the set of data elements and information for training the network state information model, wherein the step of performing CI/CD pipeline execution comprises at least performing test case execution for a multitude of test cases by repetitively executing the SWNC of the second target communication network under pre-defined test conditions and collecting log information generated during test case execution, the log information comprising at least information regarding associated test conditions, generated network states and an observable test output of the SWNC.

Accordingly, in another configuration of the present invention, test case execution for model training may be specifically performed in a CI/CD environment of the respective SWNC while each of the corresponding information required for model training may be gained by log information and/or protocols input and output during CI/CD. Herein, usage of CI/CD pipeline execution may particularly lead to the advantage that potentially each test case condition possible for a given SWNC execution is at least tested once, resulting into the effect that a maximal bandwidth of training data and with it, a most accurate network state information model training can be provided. Furthermore, since both, CI/CD execution and logging of execution data are generally implemented in common model implementation work flows of network systems, maximal resource-efficiency for generating training data can be achieved (since no additional training data generation process is required) while, at the same time, the respective training data is already tailored to the execution behaviour of the corresponding SWNC on which the trained network state information model shall be thereinafter applied to.

In addition, in another example, the training of the respective network state information model may likewise further comprise at least the steps of:
performing a selection of network states being specific to the test case associated to the set of data elements and information used for training the network state information model; and
training the network state information model to associate the selected network states with the set of data elements and information.

On that account, another configuration to be implemented into the training process of the proposed network state information model may include an initial and additional process of selecting only test case-specific network states for test case related model training, specifically so as to enable the network state information model to learn description of respectively identified network states only based network states definite for a given SWNC condition and/or behaviour.

Herein, the reason for such an additional process may lie on the fact that during execution of test cases in a general communication network, specifically in dynamic networks, usually many different network states may occur as a result of performing initialization, common configuration, resource allocation, bootstrapping etc. of the network, whose purpose is, for example, only to prepare the respective communication network (i.e. bring it to a condition) in which the decisive part of the test case can be executed. At the same time, also final steps may be performed during each of the test cases in which only resource releases, decommission configuration etc. may be conducted, independent of the condition/behaviour of the test case itself, resulting in the effect that a fracture of network states generated and identified in a given test case may commonly not result from the specific test conditions defining a given test case, but only from system relevant execution requirements. As a result, by identifying and selecting respective network states which are only specific for a given test case (and thus, the related test case conditions) prior to the actual learning phase and thereinafter importing only such specific network states to the network state information model for actual training, unnecessary information for the training phase can be effectively sorted out while, at the same time, the connection between the identified network states of a corresponding test case and its respective conditions/test case descriptions can be narrowed down to the actual network states to be associated with the test case. Consequently, with the additional configuration mentioned afore, an additionally more resource-efficient and precise training process can be generated.

Further, regarding to actual process of initial network state selection, again variant configurations or mechanisms may be conductible so as to identify the specific network states of a corresponding test case. Herein, one configuration of such mechanism may, for example, rely on the direct comparison of network states identified for a respective test case with network states identified for residue test cases executed for network state information model training.

Accordingly, in another example of the herewith proposed invention, the selection of the network states being specific to the test case may be performed by comparing the network states of the SWNC associated with the test case with network states of the SWNC existing during execution of other test cases of the SWNC in the second target communication network and thereinafter excluding network states of the SWNC associated with the test case which share a pre-defined amount of similarity with the network states of the other test cases

On that account, it is initially to be noted that the "amount of similarity" defined in the above-mentioned configuration is not to be mistaken with any specific similarity characteristic or parameter possible to identify the similarity of a given network state with such of other existing network states, but is rather to be understood as any possible parameter that is capable of expressing the level of likeliness that a given network state of a test case may be equally found in other test case examples.

For example, a possible way to express the respective similarity of a given network state may be generated by performing cosine similarity execution for the different network states identified in each of the test cases, specifically by forming each of the corresponding network states into numerical vectors and thereinafter measuring the similarity of each vector by cosine similarity processing. In addition, other possibilities may equally comprise the usage of Euclidean or Manhatten Distance calculations, clustering-based approaches, feature matching or heatmap comparisons, each outputting a numerical value representing the similarity of a given network state to such generated and/or identified in other test case volumes. Moreover, in order to finally exclude and/or select a given network state for model training, the respective numerical similarity value may be additionally compared to a pre-defined threshold value in the final step, resulting in an effective way to specify the corresponding network states required for the consecutive training phase.

Based on this, the so produced pre-selection of test case-specific network states thus allows for a more precise training of the corresponding network state information model and thus equally for a more precise identification of the sought human interpretable semantic information associated to the respective network states based on the improved training.

In addition, in another example embodiment, it may also additionally improve the application of the trained model itself, predominantly as it may likewise help to specify which kind of human interpretable semantic information are to be included to an associated network state determined in the corresponding model application phase.

On that account, in a further example configuration of the herewith proposed invention, it may be for example equally possible that the human interpretable semantic information may further correspond at least to a combination of information included in the sets of data elements and information of different test cases under which the SWNC was executed in the second target communication network; wherein
for generating the at least one human interpretable semantic information, the network state information model may additionally identify the network states of the SWNC being executed as a combination of network states associated to one or more of the different test cases and thereinafter generate the at least one human interpretable semantic information based on the information included in the set of data elements and information identifying the corresponding one or more of the different test cases.

In this regard, the determination of correct human interpretable semantic information to be associated to one or more given network states may be specifically proceeded, by means of the trained network state information model, by conducting a deterministic model recombination assessment step in which, in case the human interpretable semantic information are requested for network states produced by a SWNC under unknown execution conditions, the respectively identified network states are initially determined as a combination of network states priory associated to one or more test cases and then the corresponding human interpretable semantic information are generated based on the content found in the set of data elements and information associated to the corresponding (combined) test cases. As a consequence, since with this configuration the respective content to be included in the human interpretable semantic information is directly dependent on the specific network states assigned to each of the priory used test cases, the aforementioned pre-selection of test case specific network states likewise further improves the accuracy achieved during generation of the human interpretable semantic information, predominantly as information potentially to be added from non-specific network states can be effectively omitted.

In addition, the reason for generating the content of the respective human interpretable semantic information as a combination of selected test case descriptions (i.e. the content of the sets of data elements and information concerning respective test cases) may be additionally attributed to the fact that semantic description of network state identified in under unknown execution conditions (that is, real-life conditions of the SWNC) must be still depicted as a challenging task, even for well-trained identification models. Specifically, when the respective trained network state information model is applied in a live network deployment, it is to be noted that, under normal conditions, the trained model is generally confronted with the challenge that the observed network states are caused by multiple effects conglomerated in the network at the same time. As a result, while the respective model training based on several isolated test cases may enable the trained model to associate a pre-determined number of network states with given test case descriptions (which may be thereinafter used to form the respective human interpretable semantic information), it may be still possible that the trained network state information model can output rather diverse and/or erroneous information in the end, specifically since it did not account for the aforementioned conglomeration of several diverse network conditions at the same time. For that reason, in order to further enhance the precision to describe the respectively identified network state in a given (real) use case of a SWNC, the corresponding network state information model may be equally capable of determining the identified network states of a given use case as a combination of network states associated to different simultaneous test cases (i.e. different conditions applied to the SWNC), which may efficiently simulate the conglomeration of different network condition mentioned afore and therefore further converge the output human interpretable semantic information to the actual circumstances applied in the corresponding use case.

In addition, concerning the actual implementation of the abovementioned process, the identification of the network states as a combination of network states associated to one or more of the different test cases may be, in another example, specifically performed by demultiplexing the network states associated with the different test cases and identifying a combination of one or more of the different test cases in which a combination of their corresponding demultiplexed network states shows a pre-defined amount of similarity with the network states of the SWNC being executed.

Herein, "demultiplexing" may specifically refer to a process of separating or decoding multiple network states that are combined to identify the dynamic network states of a given test case into single transmissions or data sets, resulting to the effect that each of the individual network states of a test case can be analysed individually and for that used to perform the above-mentioned test case combination process. Further, concerning the implementation of the respective demultiplexing, variant execution configuration known to such skilled in the art may be applied, wherein the present invention may not be limited to only one of such configurations.

On that account, as an example, demultiplexing may be applied based on a tag-based parsing system. Specifically, individual network state components may be attached with a corresponding tag uniquely identifying the tag and/or the associated test case and parsing may be thereinafter applied by separating each of the network states tagged with the same test case identifier. Alternatively, other types of identifiers, such as Packet Header information, message identifiers or frequency-band demultiplexing may be equally applied, leading to an effective way of separating and determining each of the network states present in all test cases individually.

Furthermore, concerning the "amount of similarity" used to identify and compare a given network state of a test case with such of the use case currently analysed by the trained network state information model, at least the same definitions and determination strategies already indicated for identifying test case-specific network states may be conducted, predominantly so as to ensure for a consistent way to identify individual network states occurring in the system. Accordingly, in a first example, a variant of different similarity identification processes, such as, again, cosine similarity processing, Euclidean or Manhatten Distance calculations, clustering-based approaches or heatmap comparisons may be proceeded to calculate a respective value of similarity between a network state of a test case and such of the current use case, wherein thereinafter, the corresponding value of similarities may be compared with a predefined threshold value so as to approve or neglect a given network state. Alternatively, in a second example, it may yet be equally possible to force a direct equivalence between the two respective network states, or the equivalence of at least one or more characteristics of the states (e.g. a pre-defined time point of appearance, location of the network state etc.) for network state similarity identification, so that the respective identification mechanism must not be limited to only one specific process.

Accordingly, based on the above-mentioned mechanism a resource-efficient and, above all, precise method for provide human interpretable semantic information concerning one or more network states identified in a target communication network or an NDT when executing an SWNC under unknown conditions can be provided.

The actual implementation of the respective network state information model may be further, in another example, generally processed in a central control element integrated in the corresponding communication network system. As an example, both, model training and application may be conducted in one or more centralized data centres or cloud-platforms included in the network system, which are typically capable of holding enough computational resource for complex model training. In addition, in other or in combination with the aforementioned configuration, the respective network models may be equally integrated into the network management system, NMS, which is configured to collect data from various network devices (e.g. routers, switches) and thus may form an efficient data source for model training. Further, additional configurations may likewise choose a Network Functions Virtualization, NFV, infrastructure/platform or the Core Network of a corresponding network system as a processing area, predominantly as each of the central system locations allows for a flexible and resource-efficient model implementation.

In contrast, in another example configuration of the herewith proposed invention, it may be yet equally possible to implement and apply at least a trained network state information model locally on a given edge device of the respective communication network, at least on a user equipment, UE, connected with the communication network via one or more connection types, such as physical or wireless connections, local networks (LAN/Wi-Fi), a Router or Gateway or variant VNFs. Specifically, also the SWNC executed in the first or second target communication network may used as such an edge device/UE.

As a consequence, in another example of the present invention, the SWNC may equally correspond to a terminal device of the first target communication network, wherein the terminal device may be at least an user equipment, UE, and wherein
at least the step of applying at least one network model including the trained network state information model to the first target communication network may be performed locally at the SWNC.

The advantage gained by such configuration may be specifically seen in the fact that a local application of the trained network state information model may result in an enhanced resource and time management within the corresponding network system. Since, by applying the trained network state information model locally on the SWNC, e.g. a respective UE, including the processing of information locally available on the corresponding UE, computational resources of the UE may be used, instead of such provided by the network (core) system, resulting in an enhanced resource distribution mechanism. Moreover, since the local information of the UE may equally include data specific to the device's radio interface (e.g. signal qualities), telco service quality (e.g. voice call establishment delays, voice call quality, data rates), mobility events (handover and associated success/failure and delay metrics), traffic measurements etc., which, at least partly, may be define private data being normally not sent to the corresponding network without the users consent, additional authorization queries may be omitted, equally resulting into a more efficient application process.

In addition, in another example configuration of the herewith proposed invention, the output generated by the locally applied and trained network state information model, that is the generated human interpretable semantic information concerning one or more identified network states, may then be equally fed back the SWNCs communication network system or, specifically, another given network component found in the corresponding network system so as to enable additional subsequent actions based on the generated information.

As a consequence, in another example of the proposed invention, the herewith proposed method may be likewise comprising at least the additional steps of:
transferring the at least one network model including the trained network state information model to the SWNC; and
applying the at least one network model including the trained network state information model at the SWNC based on local data stored in the SWNC, the local data comprising at least one of information regarding the SWNC's radio interface, telco service quality and traffic measurements of the SWNC, wherein the step of reporting the human interpretable semantic information may further at least comprise reporting the human interpretable semantic information to the SWNC or conveying the human interpretable semantic information to another network component of the first target communication network.

For that reason, another advantage gained by the above-mentioned configuration is that an efficient two-way execution pipeline may be generated in which, by means of a corresponding SWNC, a trained version of the network state information model may be initially and locally applied to the data stored in the SWNC, wherein, thereinafter, the so generated information output (i.e. the human interpretable semantic information) may be again fed back to the network system for additional use.

On that account, an example for such additional use may be, for instance, realized by applying thereinafter an additional action based on the generated and/or annotated human interpretable semantic information so that the corresponding method of the herewith proposed invention may be equally comprising the step of:
performing an action indicated by the at least one human interpretable semantic information to the SWNC or another network component of the first target communication network.

Herein, the additional action may not be limited to any specific processing conducted within the network system, but may generally refer to any given responsive action possible using the determined and/or annotated human interpretable semantic information. As such, examples of the additional actions may be, for instance, the application of a subsequent recovery process (e.g. in case of fault identification), network state modification, alerting and/or notification processes capable of notifying a given user/administrator to proceed with another (selected) operation, additional root cause analysis, RCA, steps, traffic rerouting or subsequent performance monitoring, each of them dependent on the content of the initially generated human interpretable semantic information. Further, the given additional action may be equally performed automatically after transferring the respective information to the corresponding other network component or after authorization of the corresponding administrator in charge, resulting in a versatile input mechanism adaptable to any present system configuration.

Further in another example, it may be equally possible that the corresponding retransfer of the generated content of the human interpretable semantic information as well as the subsequent additional actions may be conducted in a feedback loop-based fashion, predominantly so as to converge to a predetermined solution of a problem potentially addressed within the generated human interpretable semantic information (e.g. in case the human interpretable semantic information address a "loss in storage capacity" problem in one or more of present network storage elements, a feedback loop-based additional action may foresee consecutive release of additional storage space in which, step-by-step, new storage space may be provided until the respective problem appears o be resolved).

Accordingly, in another example of the present invention, the herewith proposed method may further comprise the feature that at least the steps of applying at least one network model including the trained network state information model to the first target communication network, reporting, by the trained network state information model, the at least one human interpretable semantic information associated with the one or more network states and performing the action indicated by the at least one human interpretable semantic information to the SWNC or another network component of the first target communication network are performed in a closed loop fashion until a pre-defined parameter of the first target communication network has changed or a pre-defined number of iterations of the closed loop has passed.

This may specifically enable an efficient and automatic restoration process within a given network system, predominantly since with the respective feedback loop process even complex problems or elaborate root cause identification mechanisms may be resolved/applied with high accuracy while, at the same time, required computational resources may be lowered to a minimum.

As a consequence, given that the above-mentioned embodiments and configurations of the herewith proposed method for providing human interpretable semantic information for network states generated during a SWNC execution process defines an efficient way to not only predict network states occurring during SWNC execution, but also ensures that these predictions are explainable in a manner comprehensible and actionable for human domain experts, the herewith proposed invention enables operators to interpret predicted network behaviours and performance in the context of the actual network, facilitating better decision-making and proactive management of network resources.

Furthermore, additional variants of the proposed invention may likewise correspond to a sole use case of an, respectively, already trained version of the network state information model, a network node describing a given network element of the given (first) communication network being configured to process any of the aforementioned method steps, including the preceding use case, and at least a computer readable medium storing instructions therein, wherein the instruction may be executed by at least one processing unit of a machine causing said machine to perform any of the aforementioned method steps.

Accordingly, as an additional example of the present invention, another method for providing human interpretable semantic information of network states of a software defined network component, SWNC, generated in a first target communication network, according to the present invention may comprise the steps of:
applying at least one network model including a trained network state information model to the first target communication network to generate at least one human interpretable semantic information of one or more network states of the SWNC determined during execution in the first target communication network, wherein the trained network state information model is trained in such way that, based on the determined network states, the trained network state information model is configured to output the human interpretable semantic information identifying the associated network states in a human interpretable manner; and
reporting, by the trained network state information model, the at least one human interpretable semantic information associated with the one or more network states to, for example, a network element or operator.

Further, in another example of the present invention, there might be as well exist a network node of a first target communication network, configured to provide human interpretable semantic information of network states of a software defined network component, SWNC, generated in the first target communication network of the network node, wherein the first network node comprises:
at least one processor; and
at least one memory storing instructions that, when executed by the at least one processor, cause the network node at least to:
   receive a set of data elements and information identifying pre-defined test cases under which the SWNC is executed in a second target communication network;
   train, on the basis of the received set of data elements and information, a network state information model to determine human interpretable semantic information of at least one network state of the SWNC identified during execution in the first target communication network based on the identified network states;
   apply at least one network model including the trained network state information model to the first target communication network to generate at least one human interpretable semantic information of one or more network states of the SWNC determined during execution in the first target communication network; and
   output, by the trained network state information model, the at least one human interpretable semantic information associated with the one or more network states to a network element or operator.

Moreover, concerning the above-mentioned network node, the respective SWNC may equally correspond to a terminal device of the first target communication network, the terminal device being at least a user equipment, UE, and wherein the network node is at least for applying the trained network state information model further configured to
transfer the at least one network model including the trained network state information model to the SWNC;
apply the at least one network model including the trained network state information model locally at the SWNC based on local data stored in the SWNC, the local data comprising at least one of information regarding the SWNC's radio interface, telco service quality and traffic measurements of the SWNC; and
wherein the network node is at least for reporting the human interpretable semantic information further configured to
output the human interpretable semantic information to the SWNC or conveying the human interpretable semantic information to another network component of the first target communication network to, for example, a network element or operator.

Lastly, in another example, the present invention may likewise comprise of a computer readable medium storing instructions thereon, the instructions, when executed by at least one processing unit of a machine, causing the machine to perform the method according any of the embodiments and configurations mentioned above.

Further, while some example embodiments will be described herein with particular reference to the above application, it will be appreciated that the present disclosure is not limited to such a field of use, and is likewise applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may further include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

In addition, other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an exemplary training process of the present network state information model according to a first embodiment of the present invention;
Figure 2 schematically illustrates an exemplary application process of the present network state information model to identify and generated human interpretable semantic information regarding one or more network states of a SWNC established as annotation of the respective network states according to the first embodiment of the present invention;
Figure 3 schematically illustrates an overview of an exemplary network state detection process used to identify test case specific network states for model training according to the present invention;
Figure 4 schematically illustrates a work flow of the network state detection process presented in Figure 3;
Figure 5 schematically illustrates an overview of a demultiplexing process used in the present invention to define the content of the human interpretable semantic information formed as state annotations as a combination of network states found in several test case executions;
Figure 6 schematically illustrates an exemplary training process of the present network state information model according to a second embodiment of the present invention;
Figure 7 schematically illustrates an exemplary application process of the present network state information model to identify and generated human interpretable semantic information regarding one or more network states of a SWNC established as annotation of the respective network states according to the second embodiment of the present invention;
Figure 8 schematically illustrates a process of applying a respective version of the trained network state information model locally to an edge device of the corresponding communication network or NDT, specifically to an UE allocated in the communication network or the NDT, according to a configuration of the present invention;
Figure 9 schematically illustrates a system configuration for providing the human interpretable semantic information according to an example configuration of the present invention.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.

Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighbouring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Now, before going into detail about the example embodiments of the present disclosure, it may still be worthwhile to briefly go through some exemplary general aspects of machine learning aspects, and more particularly AI (artificial intelligence) and/or ML (machine learning) related techniques/procedures that may be considered useful for understanding the present disclosure.

ML frameworks and techniques are being increasingly deployed across the 5G networks (including for example RAN, core network, as well as management system/functionality) and it is expected to scale up as the technology further grows, e.g., to 5G advanced networks, 6G networks, or the like. In addition, there is also general interest from the telecommunication community in different standards forums to study and standardize different ML frameworks and functionalities and to leverage the capability of ML to improve the use cases of respective standard bodies and different working groups within them. For example, 3GPP has also been actively involved in studying different aspects of ML capabilities and its applicability in different working groups. To name a few:
- SA (Service and System Aspects) 5 deals with the WI (Work Item) on the PM (Performance Management) and KPI (Key Performance Indicator) enhancements for 5G and advanced systems, generally focusing on specifying the required PMs and KPIs for measuring the performance of different network entities.
- The study on SA5 generally focuses on the management aspects of training, re-training, testing and inference making.
- 3GPP SA2 generally deals with some of the advanced topics on ML such as enhancements in trained ML model sharing, support of FL (Federated Learning) in 5C core.

In addition, the RAN3 study item on enhancements of data collection for NR and EN-DC has described the functional framework for RAN Intelligence. Since this functional framework is considered to be readily understandable by the skilled person, detailed descriptions thereof are thus omitted for the sake of conciseness. In a broad sense, the framework generally proposes two options for ML model training and deployment. The first option is to train the ML model at RAN and deploy the same model for inference in the RAN itself. The second option is to train the ML model at OAM and deploy the model for inference at RAN. In either of these options, the inference is happening at the RAN. Thereafter, SA5 performed a study to understand the implications of the RAN3 study described above to SA5.

Network entities across RAN and core are adopting AI/ML framework, also in the standards. Generally speaking, each network entity may train, retrain, and/or deploy multiple ML models for inference. It may also be considered as equally important to analyze the feasibility of the framework by providing appropriate aiding information to understand and improve the efficiency of AI/ML usage in different AI/ML-enabled network entities.

Towards 5G-Advanced and 6G, it may be anticipated that a lot of RAN, core and management use cases may be driven by AI/ML-based analytics. Therefore, a significantly large number of AI/ML models may be trained and/or deployed for inference directly in network entities, such as UEs, base stations (e.g., gNodeBs), core network functions and/or management functions.

As illustrated above, the present disclosure generally seeks to provide an accurate and efficient way for not only predicting network states occurring during execution of a given NDT and, in the best case, also in the respective communication network simulated by the NDT, but also of ensuring that these predictions are explainable in a manner that is comprehensible and actionable by human domain experts. For this, the present disclosure stipulates to conduct the generation of human interpretable semantic information concerning one or more network states identified for a given SWNC of the communication network or the corresponding NDT based on a trained network state information model, as mentioned afore.

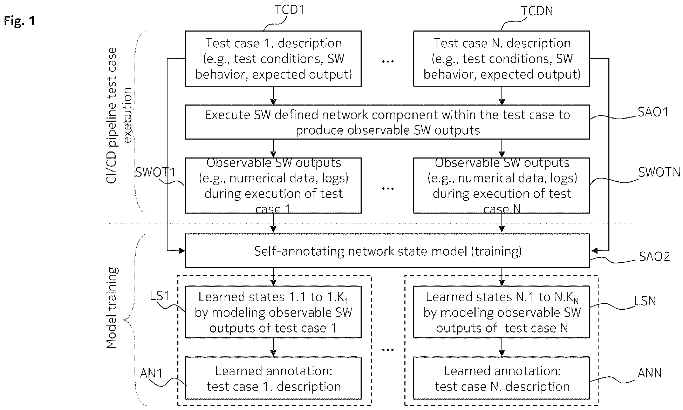

On that account, Figure 1 shows a first exemplary process flow of the training process of the corresponding network state information model according to a first example embodiment of the present invention.

Herein, as an initial introduction and in the sense of the present invention, human interpretable semantic information are to be understood as human comprehensible, that is, readable information concerning one or more network states identified during the execution of an SWNC and may include at least, among others, information regarding the cause of the respective network states (e.g. corresponding network conditions leading to the respective network states), different network state characteristics (e.g. network components affected by the respective network states, time point of emergence, duration etc.) or solutions to pre-defined network conditions (e.g. an appropriate solution to adapt a given identified network state) which may help a respective network operator and network element to understand the current network conditions present during SWNC execution, thereby enabling the introduction of appropriate and target-oriented countermeasures in case of potential system failures (e.g. in case of unexpected system behavior/output).

Furthermore, in the present embodiment shown in Fig. 1, the respective human interpretable semantic information are established and generated as annotations of associated network states, that is, information annotated to one or more network states the human interpretable semantic information are referring to, making the above-mentioned network state information model to an automatic and self-annotating network state information model.

Further, now referring to the content shown in Fig. 1, the respective model training indicated under Fig. 1 generally comprises two separate execution segments finally leading to a fully trained network state information model.

On that account, the first of the two execution segments defines a test case execution segment configured to provide the essential training data for the network state information model, specifically for training the respective (untrained) network state information model to associate one or more of respectively identified network states (generated by the execution of a given SWNC) with a given human interpretable network state description.

For this, in the present embodiment shown in Fig. 1, CI/CD pipeline execution processes are performed in which test cases, each having a test case description TCD1 ... TCDN containing test conditions (e.g., the scenario and context in which the SWNC is tested), an expected SWNC behavior (e.g., an action that the SWNC will produce) and an expected output (e.g. selected numerical/log outputs that the SWNC should produce during the test case execution), are conducted (step SA01), ultimately resulting, by executing the respective SWNC under the known and selected execution conditions, to a respective observable SWNC output SWOT1 ... SWOTN for each test case, defining the actual output of the corresponding SWNC for the corresponding test case conditions.

Thereinafter, in the subsequent training process (step SA02), the yet untrained network state information model may then receive corresponding pairs of test case descriptions TCD1 ... TCDN (i.e. the set of information concerning each test case, including at least the test case conditions, the expected SWNC behavior and the expected output) as well as observable SWNC outputs SWOT1 ... SWOTN as a training sample so as to associate the corresponding network states known from the test case with the information gained in the test case description while it equally learns to identify/determine the occurrence of one or more network states based on an observed SWNC output as an initial network state information model input. As a result, the respective network state information model thus learns, as a first model function to be represented by a first state identification model segment of the network state information model (top bar shown in the lined box of Fig. 1), to represent the (observable) output of a given SWNC as a combination of several abstract network states associated with the respect output (e.g. the "learned states LS1 ... LSN" learned for each of the respective observable SWNC output SWOT1 ... SWOTN used for each test case). In addition, the trained network state information model equally learns, as a second model function to be represented by a second state information generating model segment (bottom bar shown in the lined box of Fig. 1), to associate distinct human interpretable semantic information (the learned annotations AN1 ... ANN for each of the test cases) with a distinct combination of corresponding abstract network states, predominantly by associating each of the known network states known from the execution of each of the test cases with the corresponding test case conditions and/or descriptions.

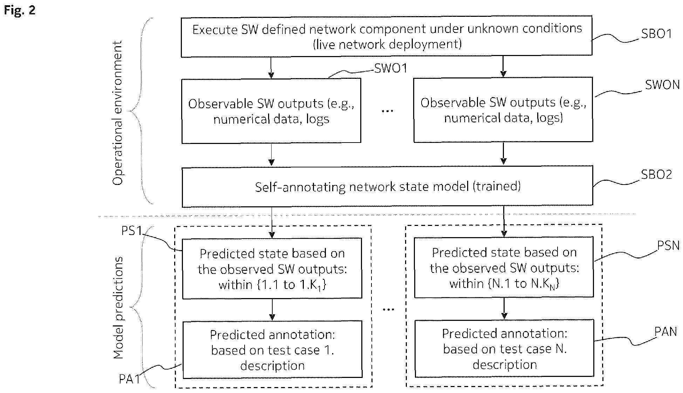

Figure 2 further shows an exemplary illustration of a consecutive application of the trained network state information model for identifying/generating appropriate human interpretable semantic information concerning network states of the SWNC executed under predominantly unknown conditions.

Especially, as can be seen by the configuration shown in Fig. 2, the application process of the trained network state information model may be equally divided in two different process segments, wherein each of the segments may be processed individually and/or consecutively so as to generate the sought human interpretable semantic information.

Herein, the first process segment corresponds to the actual input process for introducing the corresponding observed output of the SWNC generated during unknown execution conditions, which is in Fig. 2 summarized under the title "operational environment".

In this segment, the SWNC is executed in a real operational network environment under unknown conditions (step SBO1), resulting, depending on the number, type or conditions of the SWNC executions, to one or more observable SWNC (SW) outputs SWO1 ... SWON which may be used for human interpretable semantic information generation.

On that account, it is noted that the "real operational network environment" under which the SWNC execution is proceeded may correspond to the same communication network as such used for the corresponding model training. In another embodiments, it may yet be equally possible to apply the respectively trained model also to other communication networks and specifically to NDTs simulating the aforementioned communication network used for training so that the presented model application process can be specifically built as an network state identification and interpretation process for SWNCs used in NDTs, while the corresponding identification model is priory trained with real network data (the test cases executed in the actual communication network). This specifically led to a more precise identification/interpretation of present network states using the trained network state information model, predominantly as the output of the corresponding model becomes based on real situations rather than such artificially simulated by the NDT.

Further, as the next step, each of the generated observable outputs SWO1 ... SWON is transferred to the trained network state information model in order to identify the sought human interpretable semantic information (step SBO2).

Herein, in contrast to the CI/CD-based learning scenario, in this configuration there is no direct information regarding the SWNCs expected behavior and execution conditions. Nonetheless, since the same SWNC is generally used for the test case execution, the SWNC should, even in real execution scenarios, produce the same type of observable outputs as it did within the control test environment. As a consequence, since, based on the fact that the respective network state information model was trained by the preceding test case executions so as to associate a given number of network states with a corresponding observable output and, thereinafter, a given human interpretable semantic information with a number of identified network states, the trained network state information model is capable of "recognizing" which of the former test case scenarios matches best the current operational conditions (based on the respectively observed SWNC outputs SWO1 ... SWON) and produces human interpretable semantic information (formed as network state annotations) by recalling the matching test case's description (i.e. the content of the set of data elements and information used to define the execution of the corresponding test case) and potentially modifying/extending/adapting it to the currently observed conditions.

Consequently, based on the above-mentioned characteristics of the trained network state information model, the trained network state information model does input the corresponding observable outputs SWO1 ... SWON and subsequently identifies the corresponding (abstract) network states PS1 ... PSN as well as the associated human interpretable semantic information (i.e. the predicted annotations PA1 ... PAN) for each of the respective SWNC execution process.

At it, the respectively generated network states PS1 ... PSN as well as the generated human interpretable semantic information are shown in the second process segment illustrated in Fig. 2, summarized under the title "Model predictions". Further, it is noted that, as stated before, each of the respectively generated/identified network states and human interpretable semantic information may be produced by separate processing segments of the network state information model, namely a first state identification model segment of the network state information model (top bar shown in the lined box of Fig. 2) capable of identifying/predicting the corresponding abstract network states PS1 ... PSN of a given execution process based on the respective observable output SWO1 ... SWON, and a second state information generating model segment (bottom bar shown in the lined box of Fig. 2), capable of further associating a distinct human interpretable semantic information (the predicted annotations PA1 ... PAN) with the identified network states generated by the state identification model segment. As a consequence, the general process flow generated by the trained network state information model may initially intend to generate, by means of the state identification model segment, the corresponding abstract network states PS1 ... PSN from the input observable SWNC outputs SWO1 ... SWON, while, thereinafter, by means of the state information generation model segment, the corresponding human interpretable semantic information formed as network state annotations PA1 ... PAN are determined based on the generated network states PS1 ... PSN as an input.

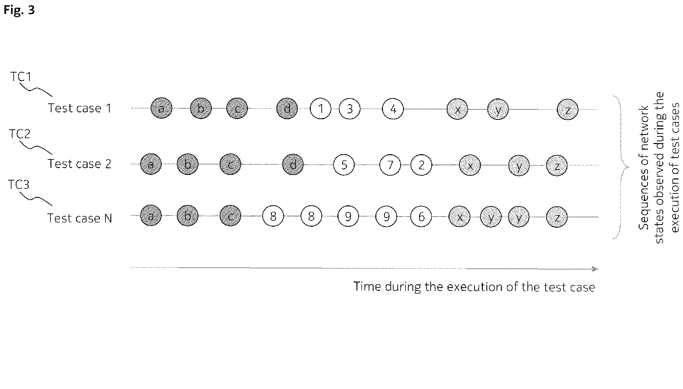

Figure 3 further shows an exemplary illustration of network states found in a number of different test cases TC1, TC2, TCN used for illustrating the additional network state selection process provided in the present invention.

Specifically, beneath the actual training process of associating specific human interpretable semantic information with corresponding test case network states, the network state information model may be equally capable of, prior to the actual training phase, selecting network states of a given test case that are specific only to the respective test case and thereinafter training only with the selected network states.

On that account, the reason for such additional process may be seen by the fact that during execution of a test case, usually many different network states occur as a result of performing initialization, common configuration, resource allocation, bootstrapping etc. whose purpose is only to prepare the network (i.e. bring it into a condition) where the decisive part of the test case can be executed. In addition, also final network states may result only from releasing resources, decommission configurations etc. which are likewise entirely independent of the actual characteristics of the test case. As a consequence, since only a part of all network states identified for a test case do actually identify the special conditions defined for the respective test case, selecting only such network states which are special for a given test case for subsequent model training may lead to an improved model output, predominantly since the so generated and trained model may in this way correctly associate corresponding human interpretable semantic information only with the correctly specified network states.

Herein, as stated, the process of selecting corresponding network states that are specific only to a given test case may be conducted by the network state information model during or, preferably, prior to its actual training, when many test cases are processed (as shown in the exemplary illustration of Fig. 1) and the sequence of network states observed during each test case can be directly compared to each other.

On that account, Fig. 3 illustrates exemplary composition of network states for different test cases executed before model training in which network states marked with the letters a - d are defined as common (i.e. unspecific) network states across all test cases and belong to initial (i.e. configuration) process steps. Network states with the letters x - z are, in addition, also common across all test cases and belong to a given final step of the test case, while the network states marked by numbers may be defined as network states being specific to a respective test case.

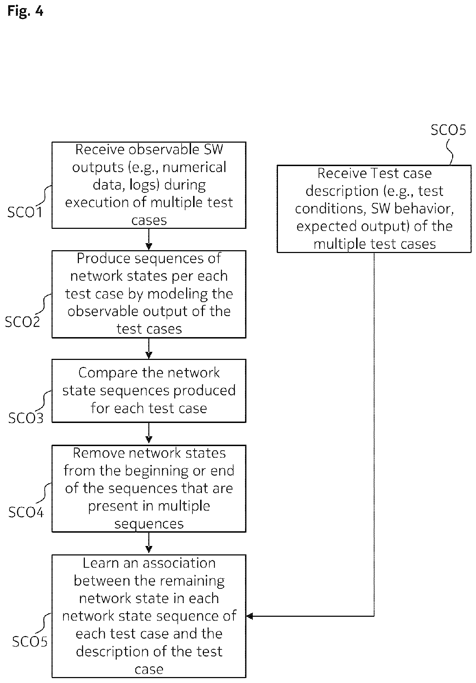

Further Figure 4 illustrate a given example for performing the respective network selection process during and/or prior to the actual model training.

At it, in a first step (step SCO1), the set of data elements and information concerning a given test case (that is, the test case description TCD1 ... TCDN illustrated in Fig. 1) are received, in addition to the observable SWNC output SWOT1 ... SWOTN gained after a corresponding test case execution.

In the following step (step SCO2), the respective network states corresponding to the test cases are created based on received information and outputs, resulting in a sequence of different network states per test case, such as exemplary shown in Fig. 3.

Thereinafter, for each test case network state sequence, (step SCO3) the corresponding network state sequence is compared with the network state sequence of other test cases so as to identify network states that appear more than once (i.e. that potentially form a test case non-specific network state). For this, typical state identification mechanisms known in the art may be processed. In addition, in further embodiments, it may be equally possible to conduct various similarity identification processes, such as Euclidean or Manhatten Distance calculations, clustering-based approaches, feature matching or heatmap comparisons, each outputting a numerical value representing the similarity of a given network state to such generated and/or identified in other test case volumes. This may be specifically efficient in case a present network states may include similar yet not entirely identical characteristics (e.g. due to small inconsistencies within the respective test case configurations) so that even in these cases non-specific network cases can be efficiently identified. Furthermore, in order to define a certain similarity level on which network states may be defined the same, an additional pre-defined threshold value may be introduced on which the similarity value generated by the respective similarity identification process may be assessed.

Thereinafter, in step SCO4, test case non-specific network states may be removed from the sequence of network states representing a given test case, which may be specifically correspond to network states found in the beginning or end of the sequence (due to the configurational characteristics mentioned above).

Lastly, in step SCOS, a given network state information model may be trained based on the selected test case specific network states only, as well as the test case descriptions (step SCO6) provided for each of the test cases as an additional input. On that account, the final training step described in step SCOS may be equal to the training process mentioned in Fig. 1, with the difference that the network state information model only receives the selected network states, instead of all network states, as a training input parameter.

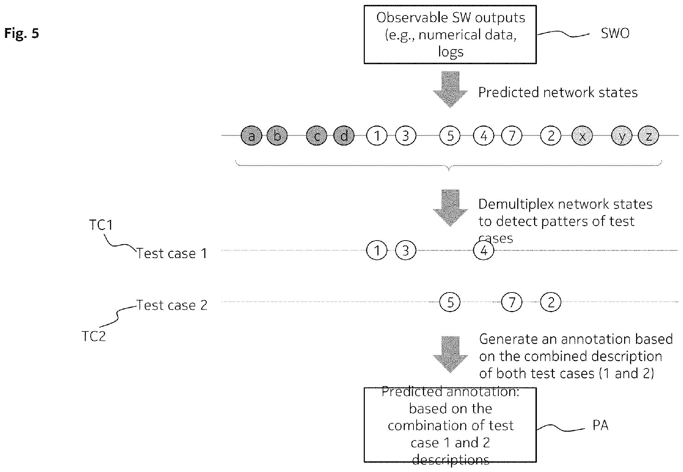

Figure 5 further illustrates another example configuration to be added to the application process of the present invention in which the respective human interpretable semantic information are generated by identifying a given network state sequence of an (unknown) SWNC execution as a combination of network states found in multiple test cases and thereinafter generating the human interpretable semantic information (i.e. the predicted annotation PA shown in Fig. 5) based on the test case descriptions (i.e. the content of the set of data elements and information defining the respective test case for model training) of these combined test cases.

Herein, the reason for this additional configuration may be seen by the fact that when the trained network state information model is applied in a live network deployment (as shown in Fig. 2), the model has the challenge that the observed network states are caused by multiple effects happening in the network at the same time. While the execution of the test case causes the observation of network states that are isolated form the execution of another test case, in a real network, multiple events are occurring simultaneously that case the effect as if multiple test cases executing in parallel and providing a mixture of network states. This creates a complexity in the network states observed in the real network as they are not specific to any one of the particular test cases.

To handle this complexity, as a further step for improving the efficiency of the corresponding network state information model in a live network, the model may additionally perform demultiplexing of the corresponding network states found for a given actual use case, predominantly so as to isolate its corresponding network states and represent them as a combination of network states specific to one or more existing test cases.

Herein, the actual concept of this demultiplexing process is illustrated in Fig. 5.

First, the observations from the real network (that is, the observable SWNC output SWO) formed by executing the SWNC under unknown conditions are received, in equivalence to the step corresponding to SWO1 ... SWON in Fig. 2.

Thereinafter, the resulting sequence of network states are determined based on the aforementioned observed outputs SWO, predominantly by means of the trained network state information model, in equivalence to the process step corresponding to SBO2 in Fig. 2. Herein, the resulting sequence of network states is a mixture of network states that are caused by simultaneous or overlapping events in the network, which may be considered as if multiple test cases were executed in parallel/in an overlapping manner.

As a consequence, due to the high coverage of test cases normally proceeded in the present invention, it can be anticipated that any network state can be represented by the combination of network states existing in one or more test cases executed for the respective SWNC.

Based on this, the trained network state information model can be configured, in the next step, to initially detect which network states are specific to given test cases rather than being common states (cf. the explanations regarding Fig. 3 & 4) and thereinafter identify, by means of a demultiplexing procedure, a combination of specific network states included in one or more test cases which may form the specific network states defined for the sought use case.

On that account, Fig. 5 shows an exemplary illustration of a determined network state sequence produced by executing an SWNC under unknown conditions (top network state sequence shown in Fig. 5). Therein, seven non-specific network states defined by the states a - d as well as x - z are found in the beginning and the end of the sequence, resulting in the effect that the residue network states 1, 3, 5, 4, 7, 2 are defining the use case specific network states of the corresponding execution case. Further, in order to identify the respective specific network states as a combination of network states of one or more test cases, the trained network state information model may further perform the aforementioned specific network state identification process for each test case priorly executed for model training and thereinafter demultiplex each of the network states of each test case for combinatory analysis.

Herein, in the example illustrated in Fig. 5, it is, for instance, found by the trained network state information model, that the specific network state sequence of the use case 1, 3, 5, 4, 7, 2 may be formed by combining the network state sequence of test case 1 TC1 and test case 2, as both, in a combinatory manner, form the identical network state sequence found for the corresponding use case.

As a consequence, in a subsequent process step after identifying the abovementioned test case combination, the trained network state information model may be thereinafter generating a corresponding human interpretable semantic information (i.e. the predicted annotation PA shown in Fig. 5) based on the combined description of the both test cases 1 & 2, predominantly since the corresponding use case may be appropriately described as an execution in which the condition of both test cases appear to exist in the same time.

Further, as an actual implementation method for performing the corresponding network state comparison and identification process, again any of the identification process known by a skilled person may be performed. In addition, also the same similarity identification process indicated for the mechanism of Fig. 3 & 4 may be applied, specifically so as to allow for a consistent network state identification throughout the used network system.

Moreover, generating human interpretable semantic information that are utilizing description/information from multiple test case descriptions may be performed by an additional Large Language Model, LLM, through a prompt that receives the original test cases, an explanation about the expected downstream task (i.e., to combine the multiple descriptions into a single description) and potentially further explanation on the relation between the identified test cases (e.g., in which order the identified test cases occurred - to have the LLM explain chronology or potential causal dependencies; if one test case is dominant as it is represented by multiple repetitions of the network states that are relevant to this test case - to cause the LLM take inputs from the dominant test case's description with an emphasis, etc.).

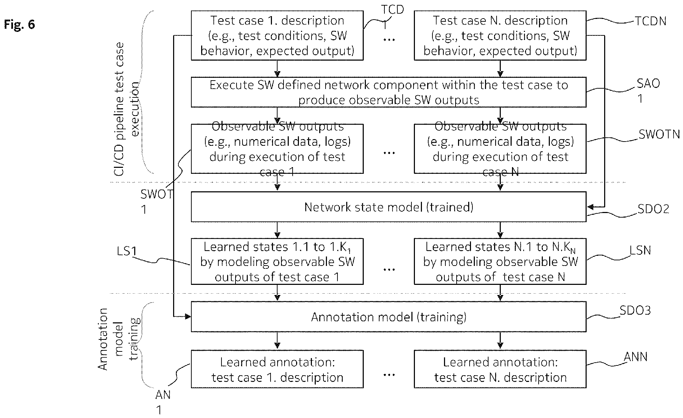

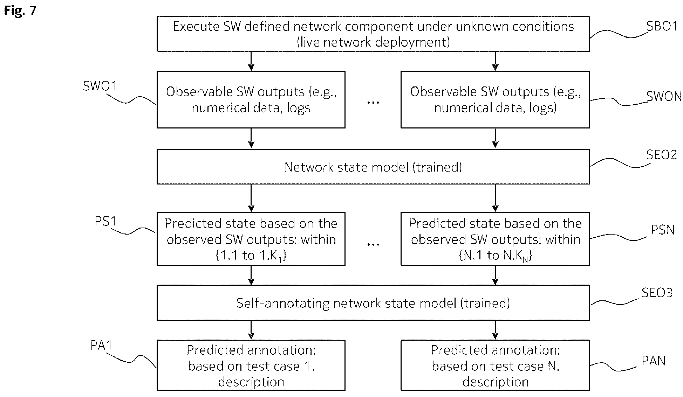

Figure 6 and 7 further illustrates a second embodiment of the present invention in which, compared to the dual function-based characteristics of the network state information model (function 1: identify network states from observable outputs; function 2: identify human interpretable semantic information from identified network states), the respective functions are split into two separate models.

Specifically, as can be seen by the content of Fig. 6 & 7, the network state information model (i.e. the "annotation model" shown in Fig. 6 & 7 under SDO3 and SEO3) may, in this case, only be configured to identify human interpretable semantic information formed as network state annotations based on identified network states while the respective network state identification is conducted by another (already trained) network state model (i.e. the network state model shown under SDO2 & SEO2 in Fig. 6 & 7).

Accordingly, the general process flow of this corresponding second embodiment for training and/or applying the corresponding network state information model may be the same as such of the first embodiment illustrated under Fig. 1 & 2 with the difference that the process part initially performed by the state identification model segment of the network state information model is now conducted by an additional, that is external, trained network state model. Herein, the advantage gained by the configuration shown in this second embodiment may be seen in the fact that already trained and present network states models can be efficiently combined with the additionally provided network state information model, resulting in the effect that the latter can be effectively integrated in network systems already containing a functional network state model. In addition, a more-resource efficient information generation process may be enabled since with an already trained network state present for identifying corresponding network states based on observable SWNC outputs, an additional training of the respective network state model can be effectively omitted.

Accordingly, note that in this case, when the training of the network state information model starts (step SDO3 in Fig. 6), the network state model (SDO2 in Fig. 6) has to be already trained. Also note that it is not required that the network state model was trained on the same test cases that are used to train the herewith described network state information model. As a consequence, this independence of the network state model and the network state information model specifically enables to re-use existing network states models and turn them into a mechanism of providing human interpretable semantic information concerning one or more identified network states.

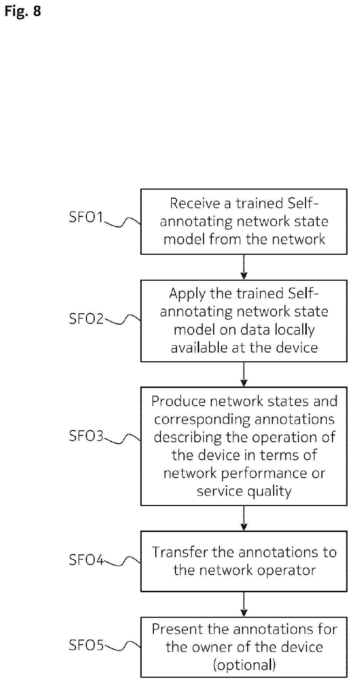

Figure 8 further shows another preferable application example of the proposed network state information model, illustrated as a flow chart for applying the respective model locally on a network edge device, herein specifically represented by a User Equipment, UE.

On that basis, the herewith disclosed invention may be equally applied on the context of UE-network interwork to improve the services provided by the network. As the general concept of this application example, the network state information model is initially trained by the network/operator in the same sense illustrated in Fig. 1 or 6 and a centralized manner, leveraging the knowledge present in the test case description, wherein the required data (i.e. the set of data elements and information required for training) is centrally collected from the network as a result from serving a multitude of edge devices (e.g. UEs) over a long period of time (i.e. a given SWNC used for training may be defined as one of the UE's existing in the network system).

Further, after successful training of the network state information model, the respective application example further stipulates to transfer the respectively trained model (or a lightweight version of it) to the specific UE for which it was trained for, in which the model is thereinafter processing information locally available on the UE by specifically using the computational resources of the UE.

Herein, the local data may include data specific to the device's radio interface (e.g. signal quality), telco service quality (e.g. voice call establishment delays, voice call quality, data rates), mobility events (handover and associated success/failure and delay metrics), traffic measurements etc. Accordingly, by processing this information, the trained network state information model may provide the human interpretable semantic information while additionally taking UE specific conditions into account, resulting in the effect that the generated human interpretable semantic information may help to identify potential issues or anomalies that the respective device is facing, or a confirmation that the device and the network (such as a voice call or data connection) operate as expected. This information may then be presented locally to the user/owner of the device (i.e. to the subscriber of the given network system), or conveyed to the network to be processed by additional network engineers so that the additional information ay be utilized for, e.g. troubleshooting the communication services of the network or to improve the relation of the network with the subscriber (e.g. proactively contact the subscriber that there are potential issues with the service and a compensation is offered, whereas the network engineers are already working on the remedy).

Accordingly, the benefits of transferring the model to the UE is to computationally offload the network from having to collect and process huge amounts of data as well as to have access to data that is potentially private and therefore cannot be transferred to the network without the device owner's explicit consent.

In addition, the respective UE side model execution may be triggered by an initial network side indication that the network is not performing well in a certain area or for specific devices - or the device owner may have contacted the operator of the communication network to report a problem with one of the network services provided (e.g., a voice call was not working, or the data rate is low), generating an interest for the operator to investigate further with the help of the UE side model.

Further, the explicit method steps to be used for the corresponding UE-side model execution are additional shown in the flow chart illustrated in Fig. 8.

Herein, in a first step (step SFO1), a given edge device (e.g. an UE) may receive a trained network state information model (i.e. the "trained Self-annotaing network state model of Fig. 8 in case the network state information model additionally forms the generated human interpretable semantic information into network state annotations) from the network.

Afterwards, in a second step (step SFO2), the trained network state information model is locally applied to the UE, predominantly by inputting UE specific data to the model.

Thereinafter, in a third step (step SFO3), based on the former model application, the respective trained network state information model outputs human interpretable semantic information concerning network states produced by the UE (i.e., in this case, annotations of the network states) which describe the operations of the corresponding UE device in terms of predefined network characteristics (e.g. network performance or service quality).

Subsequently, in a fourth step (step SFO4), the respectively generated information/annotations are again transferred to the network operator or other network elements existing within the network system, predominantly so as to execute further actions based on the generated information.

In addition, optionally in a fifth step (step SFO5), the generated information/annotations may be equally presented to the owner of the corresponding device, e.g. in order to inform the owner about potential errors and/or faulty characteristics found within the system/device.

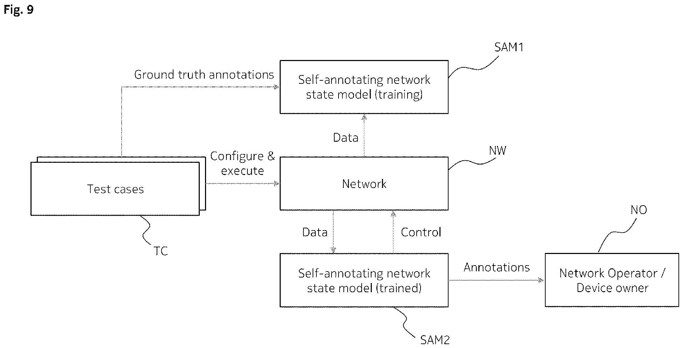

Figure 9 lastly illustrates an exemplary connection configuration of an apparatus, such as a network node, in which the above-mentioned network state information model may be integrated and/or conducted.

Herein, the respective apparatus is covering for both, the training phase (upper part of Fig. 9) and the application of the trained model (lower part of Fig. 9).

During the training, the respective network state information model (i.e. the "self-annotating network state model" SAM1) interfaces with the test cases TC to solicit the "ground truth" information for the subsequently to be generated human interpretable semantic information (i.e. the "annotations" illustrated in Fig. 9) contained as test case descriptions and, by the connected network NW, is capable of receiving the data that is produced during execution of the test cases TC.

In addition, during the application of the trained network state information model (i.e. the "trained self-annotating network state model SAM2 of Fig. 9), the model continues to interface with the network NW to receive data, whereas there is no connection with the test cases TC anymore. Additionally, the trained model may also communicate with the network to provide control information that causes effects in the network as a response to detecting certain types of network states or certain types of human interpretable semantic information by the trained network state information model in a closed loop fashion.

On that account, pre-defined network states and/or human interpretable semantic information that may trigger network side actions may include anomalies or contain indications for the presence of potential anomies with known remedies (e.g. a network states or information indicating the leakage of memory by a network function software may be resolved by restarting the instance of the network function; another network function or information indicating the handover failure due to radio link failure at a target cell may trigger a change of the handover thresholds to delay the handover of the target cell until its radio conditions become sufficient to sustain the connection of the network device being handed over). Based on this, automatically providing an action in the network controlled by the states or human interpretable semantic information produced by the network state information model shortens the time the network spends in suboptimal or erroneous conditions and improves the overall customer experience as well as service quality provided by the network system.

Additionally, the network state information model may also provide the human interpretable semantic information/annotations to the network operation and/or respective device owner NO, thus allowing for a transparent and trustworthy output to each of the respective network users.

It is to be noted that examples of embodiments of the disclosure are applicable to various different network configurations. In other words, the examples shown in the above-described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

**List of abbreviations:**

| **Abbreviation** | **Description** |
|---|---|
| DU | Distributed Unit |
| CU | Centralized/Central Unit |
| NB | NodeB |
| AP | Access Point |
| BS | Base Station |
| SWNC | Software Defined Network Component |
| NDT | Network Digital Twin |
| OAM | Operations, Administration and Maintenance |
| QoS | Quality of Service |
| SDO | Standards Development Organization |
| UE | User Equipment |

## Claims

1. A method for providing human interpretable semantic information of network states of a software defined network component, SWNC, generated in a target communication network or a network digital twin, NDT, of the target communication network, comprising:
receiving a set of data elements and information identifying pre-defined test cases under which the SWNC is executed in the target communication network;
training, on the basis of the received set of data elements and information, a network state information model to determine human interpretable semantic information of at least one network state of the SWNC identified during execution in the target communication network or the NDT based on the identified network states;
applying at least one network model including the trained network state information model to the target communication network or the NDT to generate at least one human interpretable semantic information of one or more network states of the SWNC determined during execution in the target communication network or the NDT; and
reporting, by the trained network state information model, the at least one human interpretable semantic information associated with the one or more network states.

2. The method according to claim 1, wherein
the set of data elements and information identifying pre-defined test cases comprises at least one of pre-defined test conditions under which the SWNC is executed, an expected SWNC behaviour including state information regarding network states generated by the SWNC when being executed under the pre-defined test conditions and an expected output of the SWNC, and an observable test output of the SWNC identified after executing the SWNC using the associated test conditions.

3. The method according to claim 2 further comprising
performing test case execution to generate the set of data elements and information used for network state information training by executing the SWNC of the target communication network under the associated test conditions and determining the output of the SWNC as the observable test output.

4. The method according to any of the preceding claims, wherein
the training of the network state information model further comprising:
training the network state information model in a state identification model segment of the network state information model, on the basis of the received set of data elements and information, to identify network states of the SWNC based on an observable output of the SWNC after execution in the target communication network or the NDT; and
training the network state information model in a state information generating model segment of the network state information model, on the basis of the received set of data elements and information and on the basis of the identified the network states, to generate human interpretable semantic information associated to the identified network states based on the identified network states.

5. The method according to claim 4, wherein the applying at least one network model to the target communication network or the NDT further comprising:
executing the SWNC in the target communication network or the NDT of the target communication network under unknown conditions so as to generate the observable output;
applying the trained network state information model to the target communication network or the NDT by determining, by the state identification model segment of the trained network state information model, the existent network states of the executed SWNC based on the generated observable output and generating, by the state information generating model segment of the network state information model, the at least one human interpretable semantic information of the one or more network states of the SWCN based on the network states determined by the state identification model segment.

6. The method according to claims 1 to 3, wherein the training of the network state information model further comprises:
transmitting the received set of data elements and information into a network state model configured to identify network states of the SWCN based on an observable test output of the SWCN, the SWCN being executed in the target communication network;
applying the network state model on the basis of the transmitted set of data elements and information to identify network states of the SWNC being executed in the target communication network based on the imported set of data elements and information; and
training the network state information model, on the basis of the received set of data elements and information and on the basis of the identified network states, to generate human interpretable semantic information associated to at least one of the identified network states based on the identified network states.

7. The method according to claim 6, wherein the applying at least one network model to the target communication network or the NDT further comprising:
executing the SWNC in the target communication network or the NDT of the target communication network under unknown conditions so as to generate an observable output;
applying the network state model by determining the existent network states of the executed SWNC based on the generated observable output; and
applying the network state information model by generating the at least one human interpretable semantic information of the network state of the SWCN based on the network states determined by the network state model.

8. The method according to any of the preceding claims, wherein the reporting of the at least one human interpretable semantic information further comprising:
annotating the one or more network states of the SWNC with the associated at least one human interpretable semantic information; and
reporting the one or more network states with the associated human interpretable semantic information annotated to the network states.

9. The method according to claim 1, wherein
the set of data elements and information identifying pre-defined test cases corresponds to log information generated during Continuous Integration/ Continuous Development, CI/CD, pipeline execution of the SWNC; and
wherein the method further comprising:
performing CI/CD pipeline execution of different test cases of the SWNC to generate the set of data elements and information for training the network state information model, wherein the step of performing CI/CD pipeline execution comprises at least performing test case execution for a multitude of test cases by repetitively executing the SWNC of the target communication network under pre-defined test conditions and collecting log information generated during test case execution, the log information comprising at least information regarding associated test conditions, generated network states and an observable test output of the SWNC.

10. The method according to claim 1, wherein the training of the network state information model further comprising:
performing a selection of network states being specific to the test case associated to the set of data elements and information used for training the network state information model; and
training the network state information model to associate the selected network states with the set of data elements and information.

11. The method according to claim 10, wherein
the selection of the network states being specific to the test case is performed by comparing the network states of the SWNC associated with the test case with network states of the SWNC existing during execution of other test cases of the SWNC in the target communication network and excluding network states of the SWNC associated with the test case which share a pre-defined amount of similarity with the network states of the other test cases.

12. The method according to claim 1, wherein
the human interpretable semantic information corresponds at least to a combination of information included in the sets of data elements and information of different test cases under which the SWNC was executed in the target communication network; wherein
for generating the at least one human interpretable semantic information, the network state information model identifies the network states of the SWNC being executed as a combination of network states associated to one or more of the different test cases and generates the at least one human interpretable semantic information based on the information included in the set of data elements and information identifying the corresponding one or more of the different test cases.

13. A network node of a target communication network, configured to provide human interpretable semantic information of network states of a software defined network component, SWNC, generated in the target communication network of the network node or a network digital twin, NDT, of the target communication network, wherein the first network node comprises:
at least one processor; and
at least one memory storing instructions that, when executed by the at least one processor, cause the first network node at least to:
receive a set of data elements and information identifying pre-defined test cases under which the SWNC is executed in the target communication network;
train, on the basis of the received set of data elements and information, a network state information model to determine human interpretable semantic information of at least one network state of the SWNC identified during execution in the target communication network or the NDT based on the identified network states;
apply at least one network model including the trained network state information model to the target communication network or the NDT to generate at least one human interpretable semantic information of one or more network states of the SWNC determined during execution in the target communication network or the NDT; and
output, by the trained network state information model, the at least one human interpretable semantic information associated with the one or more network states.

14. The network node according to claim 13, wherein
the SWNC corresponds to a terminal device of the target communication network or the NDT, the terminal device being at least a user equipment, UE, wherein the network node is at least for applying the trained network state information model further configured to
transfer the at least one network model including the trained network state information model to the SWNC;
apply the at least one network model including the trained network state information model locally at the SWNC based on local data stored in the SWNC, the local data comprising at least one of information regarding the SWNC's radio interface, telco service quality and traffic measurements of the SWNC; and
wherein the network node is at least for reporting the human interpretable semantic information further configured to
report the human interpretable semantic information to the SWNC or conveying the human interpretable semantic information to another network component of the target communication model or NDT.

15. A computer readable medium storing instructions thereon, the instructions, when executed by at least one processing unit of a machine, causing the machine to perform the method according to any of the claims 1 to 12.
